# EUROPEAN PATENT SPECIFICATION

(11) **EP 1 343 065 B1**
(45) Date of publication and mention of the grant of the patent: **01.04.2009**
(21) Application number: 03002900.3
(22) Date of filing: 10.02.2003
(51) Int. Cl.: G05G 1/405, B60T 7/06

(54) **Device to adjust the position of pedals in a motor-vehicle**
Lageverstellungvorrichtung von Kraftfahrzeugpedalen
Dispositif de réglage de postion de pédales d'un véhicule automobile

(30) Priority: 05.03.2002 IT TO20020181
(43) Date of publication of application: 10.09.2003
(73) Proprietor: Sistemi Comandi Meccanici S.C.M. S.p.A., 20011 Corbetta (MI) (IT)
(72) Inventor: La Rosa, Giacomo, 90144 Palermo (IT); Cavaglia', Renato, 10040 Volvera, (Torino) (IT); Ballari, Marco, 10040 Gerbole di Volvera, (Torino) (IT)
(74) Representative: Di Francesco, Gianni

(56) References cited:
- WO-A-00/68755
- WO-A-96/05547
- JP-A- 07 191 773
- JP-A- 08 022 338
- US-A1- 2001 047 696

## Description

The present invention relates to a device intended to adjust the position of a pedal in a motor vehicle, in order to provide the best possible driving position to drivers of different height.

Motor vehicles are generally provided with pedals intended to control acceleration, braking and the working of the clutch. Said pedals consist of an arm which is generally rotatably supported by a bracket located at the same level of the floor of the motor vehicle, a connection means between the accelerator, the brakes or the clutch and the arm of the pedal, and a footboard connected to the free end of the arm of the pedal which allows the driver to push the arm of the pedal.

It is necessary to adjust the position of the pedals in order to achieve the best driving position for drivers of different height. The driving position is generally adjusted by moving the seat of the driver, yet this can vary the distance between the driver and the air-bag (inflatable security device). In order to overcome this drawback, pedals have been produced the position of which can be adjusted in the longitudinal direction of the motor vehicle. Said devices are already known for example from patent EP 0,936,527, JP-A-08022338, JP-A-07 191 773 or US 6205883. However, the adjustment device shown in the first of the mentioned patents is rather complex and presents projecting knots which are not really reliable, while the device shown in the second patent presents a sliding system for the arm of the pedal which needs high smoothness and therefore continuous maintenance in order to ensure efficiency. This leads to an increase in general maintenance costs.

The device presented in document WO 00/68755 is simple and economic but it has the drawback that the footboard becomes too high at the end of the adjustment.

It is therefore an object of the present invention to provide a device to adjust the position of the pedal of a motor vehicle that overcomes the aforementioned drawbacks.

Said object is achieved by means of a device to adjust the position of the pedal presenting the characteristics set forth in claim 1.

The present invention will become more clear from the following detailed description referring to the appended drawings of a preferred embodiment, provided as non restrictive illustration of the invention, and in which:

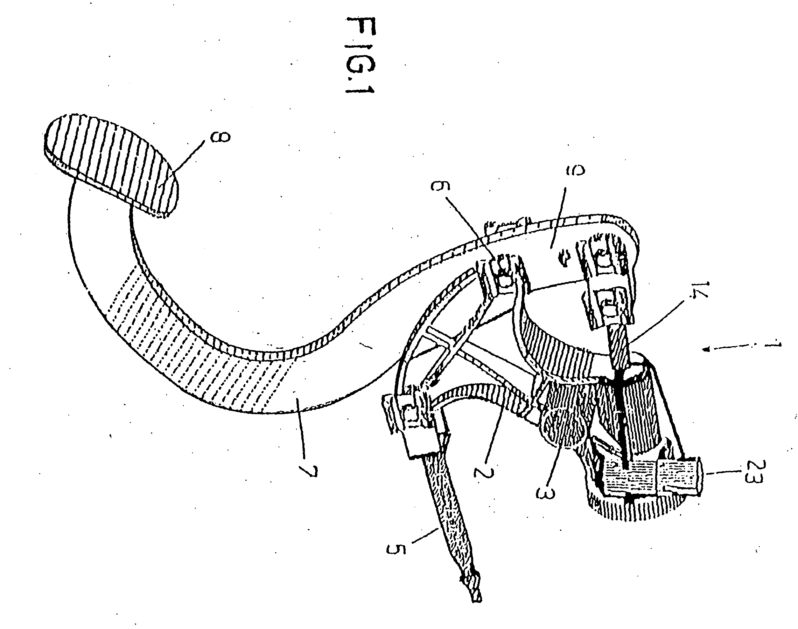

- figure 1 is a perspective view of the adjustment device according to the invention, and

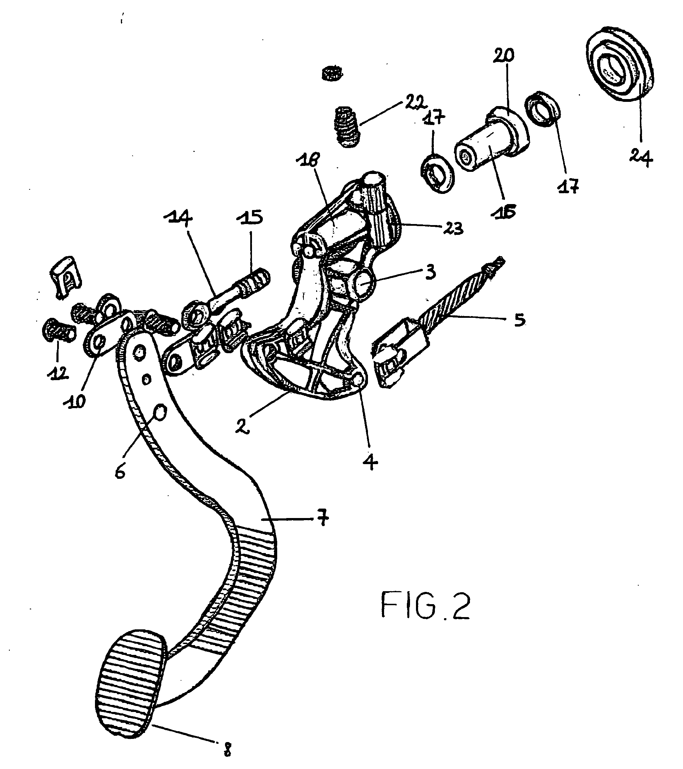

- figure 2 is an exploded view of the device in figure 1.

With reference to the figures, reference number 1 indicates an adjustment device for pedals according to the present invention.

This device includes a metal or plastic support 2, provided in its central part with a through hole 3 adapted to allow the support to rotate on a rotation axle (not shown) which is fixed to a part of the motor vehicle under the dashboard little above the floor (not shown). A first point of the support is rotatably connected at 4 to a cap 5 controlling a device on the motor vehicle, in this case the brake pump. On a second support point in a notch made on the support itself, the arm 7 of the brake is pivoted. The hinge point is near the upper end which is opposite to the one supporting the footboard 8. Said upper end 9 of the arm 7 of the brake pedal is rotatably connected by means of a pair of brackets 10 and a pair of pivots 12, to a threaded tension rod 14 in 15. The tension rod 14, defines in the intermediate position of the pedal, with the end of the arm 7, a basically square angle and besides, the axle of said tension rod lays basically on a plane passing through the axle of the arm 7 of the pedal.

The thread 15 of the tension rod 14 gets coupled to the one of an internally threaded bushing 16, which is rotatably housed by means of bearings 17, into a housing 18 made on the support 2 basically in correspondence with its third angle, and provided with a through hole 19, intended to allow the insertion of said tension rod. The external wall of the bushing 16 is provided with a threaded part 20 which is coupled to a worm screw 22 housed in a seat 23 which is tangent to the seat 18 and perpendicular to it. The worm screw 22 is coupled by means of a flexible transmission to a motion generator, for example to an electric engine (not shown) adapted to make it rotate in both directions after the driver commands it. The seat 18 of the bushing 16 is closed by a cap 24. The distance between a fulcrum point 6 of the arm 7 of the pedal, and the end connected to the tension rod 14 is set according to the desired stroke of the pedal. The longer the lever arm, the longer the stroke of the pedal. Particularly useful is the fact that the tension rod 14 works basically under traction so that its dimensions can be particularly reduced.

With the device according to the invention, the adjustment of the position of the pedal for the working of the brakes and/or clutch and/or accelerator, will be, implemented by means of the worm screw rotating in one direction or the other, depending on the desire to make the tension rod 14 translate forwards or backwards in the bushing 16.

While translating, the tension rod 14 carries with it the end of the arm 7 of the pedal to which it is connected. The arm 7 will rotate on the fulcrum 6 making the footboard 8 reach a new position that better suits the driver, without the pedal being moved.

The component parts of the structure can present different shape and connecting points and can be replaced by equivalent means, without going beyond the scope of the present invention according to what is claimed in the appended claims.

## Claims

1. An adjustable control pedal apparatus to adjust the position of a pedal of a motor vehicle, the apparatus comprising the pedal, said pedal consisting of an arm (7) provided with a footboard (8) at one of its ends, said apparatus including a support (2) which is intended to be rotatably supported by a fixed structure of the vehicle, and on which support (2) there are located: a connector articulated to a means (5) for controlling one of the devices located on the motor vehicle; a pivot (6) to rotatably connect the arm of the pedal (7) and a connection means (14) between a point on the support and the arm (7); the length of which connection means (14) is variable, wherein said pivot (6) is connected to the arm of the pedal (7) at a point near the end without the footboard (8) and the connection means (14) is connected to said arm of the pedal (7) at the end without the footboard,
**characterised in that** the connection means the length of which varies consists of a tension rod (14) provided, at the end which is not connected to the arm of the pedal (7), with a thread (15) adapted to couple with that of a bushing internally treaded (16) rotatably housed inside a housing (18) made on the support (2).

2. Apparatus as claimed in claim 1 **characterised in that** the tension rod (14) in the intermediate adjusting position of the pedal defines, with the end of the arm (7), a basically squared angle and that the axis of said tension rod (14) lays basically on a plane passing through the axis of the arm (7) of the pedal.

3. Apparatus as claimed in claim 1 **characterised in that** the bushing (16) is externally provided with a gear (20) adapted to couple with a worm screw (22) rotatably controlled by a flexible means in order to screw or unscrew the bushing on the thread (15) of the tension rod (14).

4. Apparatus as claimed in claim 1 **characterised in that** the tension rod (14) works basically under traction.

5. Apparatus as claimed in claim 1 **characterised in that** the arm of the pedal (7) is inserted into a notch made on the support (2).

6. Apparatus as claimed in claim 1 **characterised in that** the connection between the tension rod (14) and the arm (7) is of the articulated type.

## Patentansprüche

1. Einstellbare Bedienungspedalvorrichtung, um die Position eines Pedals eines Kraftfahrzeugs einzustellen, wobei die Vorrichtung das Pedal umfasst, wobei das Pedal aus einem Arm (7) besteht, der an einem seiner Enden mit einem Trittbrett (8) versehen ist, wobei die Vorrichtung eine Halterung (2) umfasst, die durch einen festen Aufbau des Fahrzeugs drehbar gehalten werden soll, und an welcher Halterung (2) sich ein Verbindungsstück, das an ein Mittel (5) zum Steuern einer der Vorrichtungen, die sich am Motorfahrzeug befinden, angelenkt ist; und ein Drehpunkt (6), um den Arm des Pedals (7) und ein Verbindungsmittel (14) zwischen einem Punkt an der Halterung und dem Arm (7) drehbar zu verbinden, befinden; wobei die Länge des Verbindungsmittels (14) veränderlich ist, wobei der Drehpunkt (6) an einem Punkt in der Nähe des Endes ohne das Trittbrett (8) mit dem Arm des Pedals (7) verbunden ist und das Verbindungsmittel (14) an dem Ende ohne das Trittbrett (8) mit dem Arm des Pedals (7) verbunden ist,
**dadurch gekennzeichnet, dass** das Verbindungsmittel, dessen Länge schwankt, aus einer Zugstange (14) besteht, die an dem Ende, das nicht mit dem Arm des Pedals (7) verbunden ist, mit einem Gewinde (15) versehen ist, das dazu geeignet ist, sich mit jenem einer Innengewindebuchse (16), die drehbar in einem an der Halterung (2) gebildeten Gehäuse (18) untergebracht ist, zu verbinden.

2. Vorrichtung nach Anspruch 1, **dadurch gekennzeichnet, dass** die Zugstange (14) in der Zwischeneinstellposition des Pedals mit dem Ende des Arms (7) einen im Grunde rechtwinkeligen Winkel definiert, und dass die Achse der Zugstange (14) im Grunde auf einer Ebene liegt, die durch die Achse des Arms (7) des Pedals verläuft.

3. Vorrichtung nach Anspruch 1, **dadurch gekennzeichnet, dass** die Buchse (16) äußerlich mit einem Zahnrad (20) versehen ist, das dazu geeignet ist, sich mit einer Schnecke (22), die durch ein elastisches Mittel drehbar gesteuert wird, zu verbinden, um die Buchse auf das Gewinde (15) der Zugstange (14) zu schrauben oder davon abzuschrauben.

4. Vorrichtung nach Anspruch 1, **dadurch gekennzeichnet, das** die Zugstange (14) im Grunde unter Zug arbeitet.

5. Vorrichtung nach Anspruch 1, **dadurch gekennzeichnet, dass** der Arm des Pedals (7) in eine Kerbe eingesetzt ist, die an der Halterung (2) gebildet ist.

6. Vorrichtung nach Anspruch 1, **dadurch gekennzeichnet, dass** die Verbindung zwischen der Zugstange (14) und dem Arm (7) vom Gelenkstyp ist.

## Revendications

1. Dispositif de commande réglage de pédale destiné à régler la position d'une pédale d'un véhicule à moteur, le dispositif comprenant la pédale, ladite pédale étant constituée d'un bras (7) doté d'un méplat (8) à une de ses extrémités, ledit dispositif comprenant un support (2) qui est destiné à être supporté avec possibilité de rotation par une structure fixe du véhicule, et sur lequel support (2), sont disposés : un raccord articulé à un moyen (5) destiné à commander un des dispositifs situés sur le véhicule à moteur, un pivot (6) pour relier avec possibilité de rotation le bras de la pédale (7) et un moyen de raccordement (14) entre un point sur le support et le bras (7), la longueur dudit moyen de raccordement (14) pouvant varier, dans lequel ledit pivot (6) est relié au bras de la pédale (7) à un point proche de l'extrémité sans méplat (8), et le moyen de raccordement (14) est relié audit bras de la pédale (7) à l'extrémité sans méplat,
**caractérisé en ce que** le moyen de raccordement, dont la longueur varie, est constitué d'une tige de tension (14) dotée, à l'extrémité qui n'est pas reliée au bras de la pédale (7), d'un filetage (15) conçu pour s'accoupler avec celui d'une douille taraudée intérieurement (16) qui est reçue avec possibilité de rotation à l'intérieur d'un logement (18) réalisé sur le support (2).

2. Dispositif selon la revendication 1, **caractérisé en ce que** la tige de tension (14), dans la position de réglage intermédiaire de la pédale, forme avec l'extrémité du bras (7) un angle essentiellement droit, et **en ce que** l'axe de ladite tige de tension (14) s'étend essentiellement dans un plan passant par l'axe du bras (7) de la pédale.

3. Dispositif selon la revendication 1, **caractérisé en ce que** la douille (16) est dotée extérieurement d'un organe (20) conçu pour s'accoupler avec une vis sans fin (22) qui est commandée, avec possibilité de rotation, par un moyen flexible, de manière à visser ou dévisser ladite douille sur le filetage (15) de la tige de tension (14).

4. Dispositif selon la revendication 1, **caractérisé en ce que** la tige de tension (14) fonctionne fondamentalement sous traction.

5. Dispositif selon la revendication 1, **caractérisé en ce que** le bras de la pédale (7) est inséré dans une encoche réalisée sur le support (2).

6. Dispositif selon la revendication 1, **caractérisé en ce que** le raccordement entre la tige de tension (14) et le bras (7) est du type articulé.
